# EUROPEAN PATENT SPECIFICATION

(11) **EP 0 914 741 B1**
(45) Date of publication and mention of the grant of the patent: **31.10.2001**
(21) Application number: 98903267.7
(22) Date of filing: 05.03.1998
(51) Int. Cl.: H04N 7/087

(54) **INTERACTIVE TELEVISION TRANSMISSION SYSTEM**
ÜBERTRAGUNGSSYSTEM FÜR INTERAKTIVES FERNSEHEN
SYSTEME DE TRANSMISSION DE TELEVISION INTERACTIVE

(30) Priority: 01.04.1997 EP 97200947
(43) Date of publication of application: 12.05.1999
(73) Proprietor: Koninklijke Philips Electronics N.V., 5621 BA Eindhoven (NL); PHILIPS NORDEN AB, 164 85 Stockholm (SE)
(72) Inventor: VAN GESTEL, Henricus, Antonius, Wilhelmus, NL-5656 AA Eindhoven (NL)
(74) Representative: Schmitz, Herman Jan Renier
(86) International application number: IB9800289
(87) International publication number: WO9844732

(56) References cited:
- WO-A-93/10605
- US-A- 5 675 372

## Description

The invention relates to an interactive television transmission system including a television transmitter and at least one television receiver. The transmitter includes means for transmitting television signals and means for transmitting operational signals defining actions to be taken by the television receiver in an interactive operation mode of the receiver. The receiver includes means for receiving and reproducing said television signals, and means for receiving and processing said operational signals. The invention also relates to a transmitter and a receiver for use in such a system.

A known interactive television transmission system as referred to in the opening paragraph is disclosed in international patent application WO-A 93/10605. In this prior art system, the user can interact with a television program. To that end, operational signals defining actions to be taken by the receiver upon user participation are transmitted in the vertical blanking interval of the television signal. The prior art receiver includes a set-top box for that purpose, i.e. dedicated processing circuitry for processing the operational signals and enabling the interactive participation. The processing circuitry also implicitly informs the user that an interactive television program is being broadcast.

It is an object of the invention to further improve the interactive television transmission system.

To that end, the system is characterized in that the transmitter comprises means for transmitting an indication signal indicating whether said operation signals are transmitted, and that the receiver comprises means for receiving and detecting said indication signal and generating a perceptible indication in response to said detection indicating that the operation signals are transmitted. Herewith is achieved that the broadcast of an interactive television program is indicated to the user without requiring the operational signals to be processed. A further advantage of the invention is that processing the operational signals can be dispensed with if the user does not wish to participate in the interactive programs. More in particular, the processing circuit can then be used for other purposes, inter alia, for advance capturing teletext pages which are also transmitted in the vertical blanking interval of the television signal. The invention renders it also possible for manufacturers to develop and produce television receivers which are not adapted to process the operational signals but detect the indication signal and display a message encouraging the user to upgrade his receiver if he wishes to participate in interactive television programs.

In an embodiment of the invention, the indication signal is repetitively transmitted at regular time intervals, for example, once per second. A considerable reduction of transmission capacity is achieved herewith and the user is nevertheless adequately and timely informed about the availability of the interactive operation mode, irrespective of whether the operation mode becomes available while he is watching a certain channel or is already available at a channel that he has just selected. In a preferred embodiment, the indication signal is a predetermined bit pattern in a predetermined teletext packet, for example, packet 8/30 of the World System Teletext standard.

Fig.1 shows an interactive television transmission system according to the invention.

Fig.2 shows a part of the television signal waveform transmitted by a transmitter which is shown in Fig.1.

Fig.3 shows a flowchart of a control program executed by a microprocessor which is shown in Fig.1.

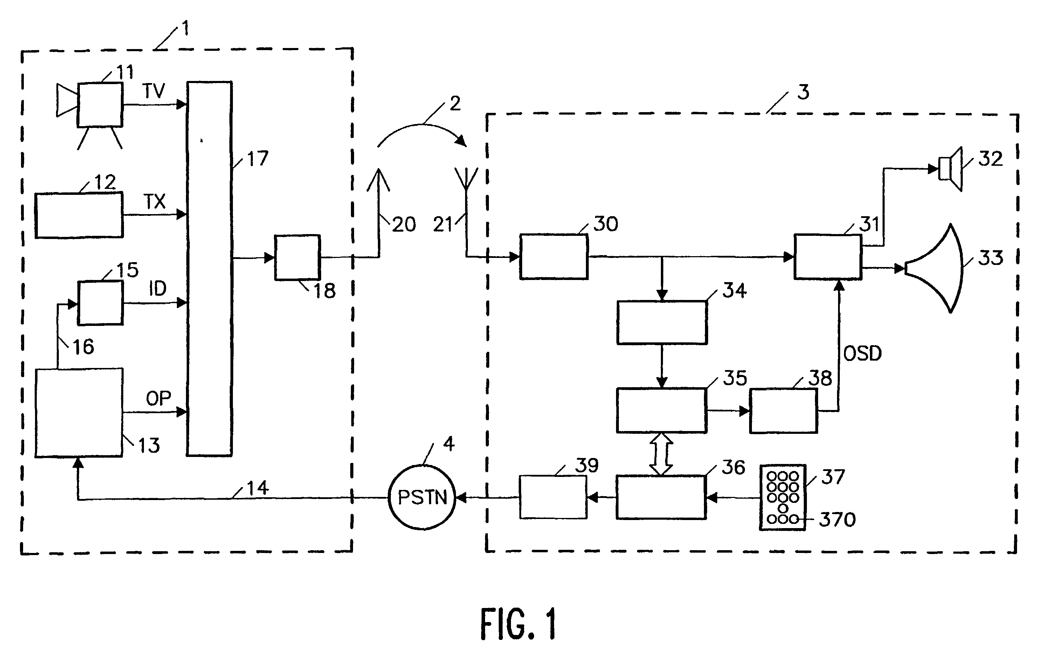

Fig.1 shows an interactive television transmission system according to the invention. The system comprises a television transmitter **1**, a broadcast channel **2**, an interactive television receiver **3** and a backwards channel **4**. The broadcast channel **2** may also be a storage medium such as a magnetic tape or optical disk on which a television program is stored. The backwards channel is here assumed to be the public switched telephone network (PSTN).

The transmitter **1** comprises a television program signal source, which is represented here by a television camera **11** generating a conventional television signal TV. The transmitter further comprises a teletext generator **12** which generates a teletext signal TX in a conventional manner, i.e. using lines in the vertical blanking interval of the television signal. The television program is supposed to be a quiz show in which the public may participate by sending answers to the questions. To that end, a computer system **13** generates operational signals OP in the form of data sequences defining actions to be taken by the receivers in response to participation by the user. For example, the data sequences define a telephone number to be called by the receivers, identify how the user's response is to be encoded in the telephone call, and specify a time interval during which answers may be given. The operational signals are transmitted in a teletext-like manner in the vertical blanking interval of the television signal. In order to receive the phone calls from the public, the computer system **13** is coupled to the public switched telephone network **4** through telephone connections **14**. In accordance with the invention, the transmitter further comprises means **15** for generating an identification signal ID which indicates that an interactive television program is being broadcast. The means **15** are controlled by the computer system **13** through a connection **16**. The television signal TV, teletext signal TX, identification signal ID, and operational signals OP are combined in a combiner stage **17** and collectively applied to a modulator **18** for RF transmission via an antenna **20.**

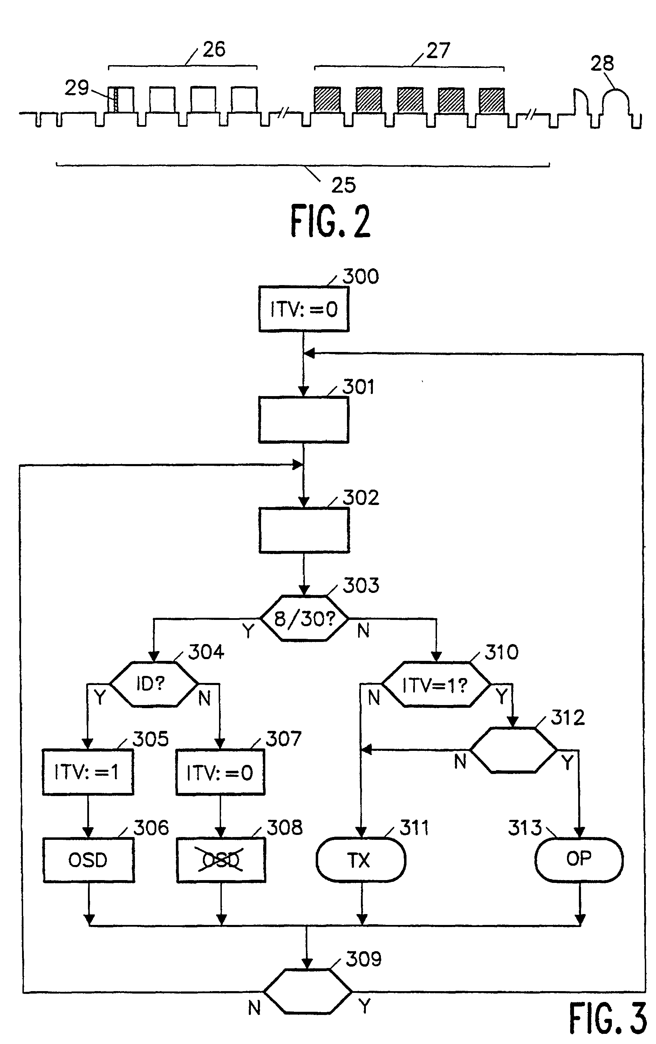

Fig.2 shows a part of the television signal waveform transmitted by the transmitter. Reference numeral **25** denotes the vertical blanking interval of the television signal which comprises, in a 625-line system, lines 6-22 of one field and lines 318-335 of the other field. In the present example, reference numeral **26** denotes teletext data packets. Numeral **27** denotes operational signals in the form of data sequences which are only transmitted if the television program is an interactive program. Numeral **28** denotes one of the lines of the active video interval carrying the conventional analog video signal.

Each of the teletext packets **26** comprises a 3-bits magazine number and a 5-bits row number. Packets having a row number in the range 0-24 define display rows. A teletext data packet having magazine number 8 and row number 30 is transmitted once per second. Such a packet 8/30 is generally referred to as a broadcast service data packet. It comprises, inter alia, the initial teletext page to be captured, the current time, a network identification, a program label, etc. Some bits of the broadcast service data packet are not yet defined. In accordance with the invention, one or more of these bits (denoted **29** in Fig.2) are used to indicate that the operational signals **27** are transmitted, i.e. that the television program is an interactive program.

Returning to Fig.1, the transmitted signal is received by the receiver **3** through an antenna **21** and demodulated by a tuner **30**. The tuner applies the demodulated baseband signal to conventional audio and video processing circuitry **31** to reproduce the TV program through a loudspeaker **32** and a display screen **33**. The baseband signal is further applied to a data slicer **34** which extracts the data embedded in the vertical blanking interval of the signal and stores said data in a buffer section of a memory **35**. The memory **35** is coupled to a microprocessor **36** which receives user commands from a (remote) control unit **37** and is further coupled, via a modem **39**, to the telephone network **4**. The memory **35** also includes a display section. Data stored in this display section by the microprocessor **36** is converted into on-screen-display signals OSD for display on the screen **33**. It will be appreciated that the microprocessor may also generate an audible signal in this manner and apply it to the loudspeaker **32**.

The operation of receiver **3** will now be explained with reference to Fig.3 which shows a flowchart of a control program executed by microprocessor **36**. As already mentioned, the data packets transmitted in the lines of the vertical blanking interval (i.e. the packets **26** and **27** shown in Fig.2) are stored in a buffer section of memory **35**. They are processed by the microprocessor during the active video interval.

In an initial step **300** of the control program, an Interactive TV flag ITV is assigned the initial value 0. In a step **301**, the microprocessor awaits the end of the vertical blanking interval. In a step **302**, a packet received in the vertical blanking interval is read from the buffer section of memory **35**. In a step **303**, it is determined whether the packet is a teletext broadcast service packet 8/30. If that is the case, it is checked in a step **304** whether the indication signal ID is transmitted by the transmitter (see Fig.1). This step includes determining the value of the special bit or multibit code **29** which is shown in Fig.2. If the indication signal ID is detected, the flag ITV is assigned the value 1 in a step **305** so as to internally store the information that the current television program is an interactive program. In a step **306**, an On-Screen-Display signal OSD (see Fig. 1) is generated so as to inform the user that he can participate in the program if he wishes. If the indication signal ID has not been detected in packet 8/30, the flag ITV is reset (step **307**) and the OSD signal is not generated or switched off (step **308**).

After processing a packet, it is checked in a step **309** whether all packets received in the buffer section of the memory have been processed. As long as that is not the case, the control program returns to step **302** to process the next packet. Otherwise, the program returns to step **301** to await the end of the next vertical blanking interval and process a next burst of data.

If the data packet is not a broadcast service packet, the program determines whether the television program is an interactive program by testing the flag ITV in a step **310.** If the program is not interactive (ITV=0), the microprocessor executes a teletext operation program **311**. By this program, the teletext data packets TX (**26** in Fig.2) are captured and decoded so as to store a plurality of teletext pages in the memory for immediate access in a teletext operation mode. Operational signals OP (**27** in Fig.2) need not be processed in this case because they are not transmitted.

If the program is interactive (ITV=1), it is determined in a step **312** whether the user actively participates in the program. The step **312** includes checking whether a key **370** (see Fig. 1) of the receiver is pressed or has been pressed before. If the program is interactive but the user does not participate, the teletext operation program **311** mentioned above is executed. Although operational signals OP are available, they need not be processed in this case. If the program is interactive and the user participates, an interactive operation mode is activated. In this operation mode, the operational signals OP (**27** in Fig.2) are processed by the microprocessor in accordance with a program **313.** Optionally, the step **312** of checking whether the user indeed participates may be omitted. This allows the receiver to process the operational signals OP in advance, thus anticipating the user's participation at a later stage.

As can readily be understood from the above description, processing of the operational signals (which may be a complex and time-consuming operation) is performed only when the TV program is indeed interactive. Processing is not required for the generation of the OSD signal. Accordingly, as long as a program is not interactive, the relevant processing circuitry (in the present example, the microprocessor) is relieved of processing the operational signals and can perform other tasks instead.

In summary, an interactive television transmission system is disclosed which includes a television transmitter (1) and at least one television receiver (3). Along with the television program (TV), the transmitter transmits operational signals (OP) defining actions to be taken by the receiver upon user participation. In accordance with the invention, the transmitter comprises means (15) for transmitting an indication signal (ID) to indicate that the television program is an interactive program, e.g. in a teletext packet 8/30. The receiver is arranged to receive and detect said indication signal and generate a perceptible indication (OSD) in response to said detection to inform the user about the type of program and activate the relevant processing circuitry (36).

## Claims

1. An interactive television transmission system including a television transmitter (1) and at least one television receiver (3), the transmitter including:
- means (11) for transmitting television signals (28),
- means (13) for transmitting operational signals (27) defining actions to be taken by the television receiver in an interactive operation mode of the receiver,
and the receiver including:
- means (31) for receiving and reproducing said television signals,
- means for receiving (35) and processing (36) said operational signals,
**characterized in that** the transmitter comprises means (15) for transmitting an indication signal (29) indicating whether said operation signals are transmitted, and that the receiver comprises means for receiving (34) and detecting (36) said indication signal and generating (38) a perceptible indication (OSD) in response to said detection indicating that the operation signals are transmitted.

2. A system as claimed in claim 1, **characterized in that** the indication signal is repetitively transmitted at regular time intervals.

3. A system as claimed in claim 2, **characterized in that** the indication signal is a predetermined bit pattern in a predetermined teletext packet.

4. An interactive television transmitter (1) including:
- means (11) for transmitting television signals (28),
- means (13) for transmitting operational signals (27) defining actions to be taken by a television receiver (3) in an interactive operation mode of said receiver,
**characterized in that** the transmitter comprises means (15) for transmitting an indication signal (29) indicating whether said operation signals are transmitted.

5. A transmitter as claimed in claim 4, **characterized in that** the indication signal is repetitively transmitted at regular time intervals.

6. A transmitter as claimed in claim 5, **characterized in that** the indication signal is a predetermined bit pattern in a predetermined teletext packet.

7. A television receiver (3) including:
- means (31) for receiving and reproducing television signals transmitted by a transmitter,
- means for receiving (35) and processing (36) operational signals (27) transmitted by said transmitter, said operational signals defining actions to be taken by the television receiver in an interactive operation mode of the receiver,
**characterized in that** the receiver comprises means for receiving (35) and detecting (36) an indication signal (29) indicating whether said operation signals are transmitted, and generating (38) a perceptible indication (OSD) in response to said detection indicating that the operation signals are transmitted.

8. A receiver as claimed in claim 7 and including processing means for processing the operational signals in said interactive operation mode, **characterized in that** the receiver comprises user-operable means for activating said processing means if said indication signal is detected.

9. A receiver as claimed in claim 7, **characterized in that** the indication signal is repetitively received at regular time intervals.

10. A receiver as claimed in claim 9, **characterized in that** the indication signal is a predetermined bit pattern in a predetermined teletext packet.

11. A method of transmitting television signals to at least one television receiver, comprising the step of transmitting (16) operational signals (27) defining actions to be taken by the television receiver in an interactive operation mode of the receiver, **characterized by** the step of transmitting (15) an indication signal indicating whether said operation signals are transmitted.

12. A method of receiving television signals from an interactive television transmitter, comprising the step of receiving (35) and processing (36) operational signals (27) transmitted by said transmitter, said operational signals defining actions to be taken by the television receiver in an interactive operation mode of the receiver, **characterized by** the step of receiving and detecting (304) an indication signal indicating whether said operation signals are transmitted, and generating (306) a perceptible indication in response to said detection indicating that the operation signals are transmitted.

13. A television signal including operational signals (27) defining actions to be taken by the television receiver in an interactive operation mode of the receiver, **characterized by** comprising an indication signal (29) indicating whether said operation signals are transmitted.

14. A storage medium on which a television signal as claimed in claim 13 has been stored.

## Patentansprüche

1. Interaktives Fernsehübertragungssystem mit einem Fernsehsender (1) und wenigstens einem Fernsehempfänger (3), wobei der Sender die nachfolgenden Elemente umfasst:
- Mittel (11) zum Übertragen von Fernsehsignalen (28),
- Mittel (13) zum Übertragen von Operationssignalen (27), die Aktionen definieren, die von dem Fernsehempfänger in einer interaktiven Betriebsart des Empfängers durchgeführt werden müssen,
wobei der Empfänger die nachfolgenden Elemente umfasst:
- Mittel (31) zum Empfangen und Wiedergeben der genannten Fernsehsignale,
- Mittel zum Empfangen (35) und Verarbeiten (36) der genannten Operationssignale,
**dadurch gekennzeichnet, dass** der Sender Mittel (15) umfasst zum Übertragen eines Andeutungssignals (29), das angibt, ob die genannten Operationssignale übertragen werden, und dass der Empfänger Mittel umfasst zum Empfangen (34) und Detektieren (36) des genannten Andeutungssignals und zum Erzeugen (38) einer verstehbaren Angabe (OSD) in Reaktion auf die genannte Detektion, wobei angegeben wird, dass die Operationssignale übertragen werden.

2. System nach Anspruch 1, **dadurch gekennzeichnet, dass** das Andeutungssignal wiederholt zu regelmäßigen Zeitintervallen übertragen wird.

3. System nach Anspruch 2, **dadurch gekennzeichnet, dass** das Andeutungssignal ein vorbestimmtes Bitmuster in einem vorbestimmten Videotext-Paket ist.

4. Interaktiver Fernsehsender (1), der die nachfolgenden Elemente umfasst:
- Mittel (11) zum Übertragen von Fernsehsignalen (28),
- Mittel (13) zum Übertragen von Operationssignalen (27), die Aktionen definieren, die von einem Fernsehempfänger (3) in einer interaktiven Betriebsart des genannten Empfängers durchgeführt werden müssen,
**dadurch gekennzeichnet, dass** der Sender Mittel (15) aufweist zum Übertragen eines Andeutungssignals (29), das angibt, ob die genannten Operationssignale übertragen werden.

5. Sender nach Anspruch 4, **dadurch gekennzeichnet, dass** das Andeutungssignal wiederholt zu regelmäßigen Zeitintervallen übertragen wird.

6. Sender nach Anspruch 5, **dadurch gekennzeichnet, dass** das Andeutungssignal ein vorbestimmtes Bitmuster in einem vorbestimmten Videotext-Paket ist.

7. Fernsehempfänger (3) mit:
- Mitteln (31) zum Empfangen und Wiedergeben von Fernsehsignalen, die von dem Sender übertragen worden sind,
- Mitteln zum Empfangen (35) und Wiedergeben (36) von Operationssignalen (27), die von dem genannten Sender übertragen worden sind, wobei die genannten Operationssignale Aktionen definieren, die von dem Fernsehempfänger in einer interaktiven Betriebsart des Empfängers durchgeführt werden müssen,
**dadurch gekennzeichnet, dass** der Empfänger Mittel aufweist zum Empfangen (35) und Detektieren (36) eines Andeutungssignals (29), das angibt, ob die genannten Operationssignale übertragen werden, und zum Erzeugen (38) einer verstehbaren Angabe (OSD) in Reaktion auf die genannte Detektion, wobei diese Angabe angibt, dass die Operationssignale übertragen werden.

8. Empfänger nach Anspruch 7 und mit Verarbeitungsmitteln zum Verarbeiten der Operationssignale in der genannten interaktiven Betriebsart, **dadurch gekennzeichnet, dass** der Empfänger vom Benutzer betätigbare Mittel aufweist zum Aktivieren von Verarbeitungsmitteln, wenn das genannte Andeutungssignal detektiert wird.

9. Empfänger nach Anspruch 7, **dadurch gekennzeichnet, dass** das Andeutungssignal wiederholt zu regelmäßigen Zeitintervallen empfangen wird.

10. Empfänger nach Anspruch 9, **dadurch gekennzeichnet, dass** das Andeutungssignal ein vorbestimmtes Bitmuster in einem vorbestimmten Videotext-Paket ist.

11. Verfahren zum Übertragen von Fernsehsignalen zu wenigstens einem Fernsehempfänger, wobei dieses Verfahren die nachfolgenden Verfahrensschritte umfasst: das Übertragen (16) von Operationssignalen (27), die Aktionen definieren, die von dem Fernsehempfänger in einer interaktiven Betriebsart des Empfängers durchgeführt werden müssen, **gekennzeichnet durch** den Verfahrensschritt der Übertragung (15) eines Andeutungssignals, das angibt, ob die genannten Operationssignale übertragen werden.

12. Verfahren zum Empfangen von Fernsehsignalen von einem interaktiven Fernsehsender, wobei dieses Verfahren die nachfolgenden Schritte umfasst: das Empfangen (35) und Verarbeiten (36) von Operationssignalen (27), die von dem genannten Sender übertragen worden sind, wobei die genannten Operationssignale Aktionen definieren, die von dem Fernsehempfänger in einer interaktiven Betriebsart des Empfängers durchgeführt werden müssen, **gekennzeichnet durch** den Schritt des Empfangs und der Detektion (304) eines Andeutungssignals, das angibt, ob die genannten Operationssignale übertragen werden und der Erzeugung (306) einer verstehbaren Angabe in Reaktion auf die genannte Detektion, wobei diese Angabe angibt, dass die Operationssignale übertragen werden.

13. Fernsehsignal mit Operationssignalen (27), die Aktionen definieren, die von dem Fernsehempfänger in einer interaktiven Betriebsart des Empfängers durchgeführt werden müssen, **dadurch gekennzeichnet, dass** das Signal ein Andeutungssignal (29) umfasst, das angibt, ob die genannten Operationssignale übertragen werden.

14. Speichermedium, auf dem ein Fernsehsignal nach Anspruch 13 gespeichert worden ist.

## Revendications

1. Système de transmission de télévision interactive comprenant un émetteur de télévision (1) et au moins un récepteur de télévision (3), l'émetteur comprenant :
- des moyens (11) pour transmettre des signaux de télévision (28),
- des moyens (13) pour transmettre des signaux opérationnels (27) définissant les actions à effectuer par le récepteur de télévision dans un mode de fonctionnement interactif du récepteur,
et le récepteur comprenant :
- des moyens (31) pour recevoir et reproduire lesdits signaux de télévision,
- des moyens pour recevoir (35) et traiter (36) lesdits signaux opérationnels,
**caractérisé en ce que** l'émetteur comprend des moyens (15) pour transmettre un signal d'indication (29) indiquant si lesdits signaux opérationnels sont transmis, et **en ce que** le récepteur comprend des moyens pour recevoir (34) et détecter (36) ledit signal d'indication et produire (38) une indication perceptible (OSD) en réaction à ladite détection indiquant que les signaux opérationnels sont transmis.

2. Système suivant la revendication 1, **caractérisé en ce que** le signal d'indication est transmis de manière répétitive à des intervalles de temps réguliers.

3. Système suivant la revendication 2, **caractérisé en ce que** le signal d'indication est une configuration binaire prédéterminée dans un paquet télétexte prédéterminé.

4. Emetteur de télévision interactif (1) comprenant :
- des moyens (11) pour transmettre des signaux de télévision (28),
- des moyens (13) pour transmettre des signaux opérationnels (27) définissant les actions à effectuer par un récepteur de télévision (3) dans un mode de fonctionnement interactif dudit récepteur,
**caractérisé en ce que** l'émetteur comprend des moyens (15) pour transmettre un signal d'indication (29) indiquant si lesdits signaux opérationnels sont transmis.

5. Emetteur suivant la revendication 4, **caractérisé en ce que** le signal d'indication est transmis de manière répétitive à des intervalles de temps réguliers.

6. Emetteur suivant la revendication 5, **caractérisé en ce que** le signal d'indication est une configuration binaire prédéterminée dans un paquet télétexte prédéterminé.

7. Récepteur de télévision (3) comprenant :
- des moyens (31) pour recevoir et reproduire des signaux de télévision transmis par un émetteur,
- des moyens pour recevoir (35) et traiter (36) des signaux opérationnels (27) transmis par ledit émetteur, lesdits signaux opérationnels définissant les actions à effectuer par le récepteur de télévision dans un mode de fonctionnement interactif du récepteur,
**caractérisé en ce que** le récepteur comprend des moyens pour recevoir (35) et détecter (36) un signal d'indication (29) indiquant si lesdits signaux opérationnels sont transmis, et produisant (38) une indication perceptible (OSD) en réaction à ladite détection indiquant que les signaux opérationnels sont transmis.

8. Récepteur suivant la revendication 7 et comprenant des moyens de traitement pour traiter des signaux opérationnels dans ledit mode de fonctionnement interactif, **caractérisé en ce que** le récepteur comprend des moyens pouvant être actionnés par l'utilisateur pour activer lesdits moyens de traitement si le signal d'indication est détecté.

9. Récepteur suivant la revendication 7, **caractérisé en ce que** le signal d'indication est reçu de manière répétitive à des intervalles de temps réguliers.

10. Récepteur suivant la revendication 9, **caractérisé en ce que** le signal d'indication est une configuration binaire prédéterminée dans un paquet télétexte prédéterminé.

11. Procédé de transmission de signaux de télévision à au moins un récepteur de télévision, comprenant l'étape de transmission (16) de signaux opérationnels (27) définissant les actions à effectuer par le récepteur de télévision dans un mode de fonctionnement interactif du récepteur, **caractérisé par** l'étape de transmission (15) d'un signal d'indication indiquant si lesdits signaux opérationnels sont transmis.

12. Procédé de réception de signaux de télévision en provenance d'un émetteur de télévision interactif, comprenant l'étape de réception (35) et de traitement (36) de signaux opérationnels (27) transmis par ledit émetteur, lesdits signaux opérationnels définissant les actions à effectuer par le récepteur de télévision dans un mode de fonctionnement interactif du récepteur, **caractérisé par** l'étape de réception et de détection (304) d'un signal d'indication indiquant si lesdits signaux opérationnels sont transmis, et de production (306) d'une indication perceptible en réaction à ladite détection indiquant que les signaux opérationnels sont transmis.

13. Signal de télévision comprenant des signaux opérationnels (27) définissant les actions à effectuer par le récepteur de télévision dans un mode de fonctionnement interactif du récepteur, **caractérisé en ce qu'**il comprend un signal d'indication (29) indiquant si lesdits signaux opérationnels sont transmis.

14. Support de mémoire sur lequel un signal de télévision suivant la revendication 13 a été mémorisé.
